# EUROPÄISCHE PATENTANMELDUNG

(11) **EP 3 901 329 A1**
(43) Veröffentlichungstag der Anmeldung: **27.10.2021**
(21) Anmeldenummer: 20020194.5
(22) Anmeldetag: 23.04.2020
(51) Int. Cl.: C25B 1/00, C01B 3/02, C25B 1/04, H01M 8/00, C25B 15/08

(54) **FESTOXIDZELLEN-SYSTEM-BETRIEBSVERFAHREN**

(71) Anmelder: sunfire GmbH, 01237 Dresden (DE)
(72) Erfinder: Borm, Oliver, 01237 Dresden (DE); Posdziech, Oliver, 01109 Dresden (DE)

(57) **Zusammenfassung**

Die Erfindung betrifft ein Festoxidzellen-System-Betriebsverfahren, in dem in einer elektrochemischen Umwandlung, mittels elektrischem Stroms aus Wasserdampf H₂O(g) oder einem Gemisch umfassend Wasserdampf H₂O(g) und Kohlendioxid CO₂, Wasserstoff H₂ oder Synthesegas CO+H₂ erzeugt wird, wobei dem Wasserdampf H₂O(g) oder dem Gemisch umfassend Wasserdampf H₂O(g) und Kohlendioxid CO₂ eine zusätzliche Menge an wenigstens einem der Stoffe aus der Gruppe Erdgas, Methan CH₄ oder eines anderen Kohlenwasserstoffes CₘHₙ zusätzlich für eine Umsetzung in Synthesegas CO+H₂ beigemischt werden, wobei eine endotherme Reformierung der beigemischten Kohlenwasserstoffe durch Einkoppeln von Abwärme aus der elektrochemischen Umwandlung erfolgt.

## Beschreibung

Die Erfindung betrifft ein Festoxidzellen-System-Betriebsverfahren, in dem in einer elektrochemischen Umwandlung mittels elektrischem Stroms aus Wasserdampf H₂O(g) oder einem Gemisch umfassend Wasserdampf H₂O(g) und Kohlendioxid CO₂ Wasserstoff H₂ oder Synthesegas CO+H₂ erzeugt wird.

Das erfindungsgemäße Verfahren ist geeignet für den Einsatz in Festoxid-Elektrolysezellen-Systemen (engl. Solid Oxide Electrolyzer Cell, SOEC) sowie in reversiblen Festoxidzellen-Systemen (engl. reversible Solid Oxide Cell, rSOC) im Elektrolysebetrieb.

Der Umwandlungswirkungsgrad solcher SOEC bzw. rSOC ist besonders hoch, wenn die Zellen bzw. Zellenstapel (Stacks) des Festoxidzellen-Systems über ihre gesamte Lebensdauer hinweg thermo-neutral betrieben werden.

In diesem Zusammenhang ist der thermo-neutrale Modus des Stacks dadurch beschrieben, dass die Wärmeproduktion durch die Ohm'schen Verluste der Elektrolysezellen im Gleichgewicht mit dem Wärmebedarf für die Spaltung des Wassers steht. Ein Vorteil von SOEC gegenüber Niedertemperatur-Elektrolyse-Systemen (PEM, Alkali) ist, dass bei hohen Temperaturen der Bedarf an elektrischen Strom zur Wasserspaltung sinkt und der Wärmebedarf steigt, so dass die Ohm'sche Wärme direkt nutzbar ist. Im thermo-neutralen Modus ändert sich die Temperatur des Stacks mit dem Lastpunkt. Dabei bleibt der Wirkungsgrad konstant hoch. Wird die Stromstärke erhöht oder erhöht sich der Widerstand der Zellen aufgrund einer Degradation, wird irgendwann eine maximale Temperatur erreicht, bei welcher die Zellen dauerhaft betrieben werden können. Eine weitere Erhöhung der Stromstärke oder des Widerstands führen dazu, dass die Wärmeproduktion im Stack die Wärmeaufnahme durch die endotherme Wasserspaltung übersteigt. Der Stack muss dann gekühlt werden, um eine Überhitzung zu vermeiden. Eine Kühlung erfolgt meist durch eine stärkere Erhöhung des Luftdurchflusses auf der Seite der Sauerstoff-Elektrode. Zusätzlich kann die Eintrittstemperatur der zugeführten Gase reduziert werden. Weiterhin steigen die Betriebsspannung und damit die aufzubringende elektrische Leistung. In einem solchen exothermen Betriebsmodus verringert sich mit Nachteil der Wirkungsgrad des Systems abhängig von dem Grad der Exothermie, gekennzeichnet durch den Anstieg der Stackspannung und den Kühlluftbedarf. Niedertemperatur-Elektrolyse-Systeme arbeiten immer im exothermen Modus und besitzen damit einen inhärent niedrigeren Wirkungsgrad.

Weiterhin hat sich gezeigt, dass die Kühlung eines Stacks im exothermen Modus (Wärmeproduktion führt zu einer kritischen Temperaturerhöhung) mittels Prozessluft und -gas nur sehr schwierig umzusetzen ist, denn das veränderte Temperaturprofil führt zu einem erhöhten Widerstand im Stack und damit zu einer weiteren Erhöhung des Widerstands.

Im Langzeitbetrieb ist eine Degradation des Stacks und eine damit verbundene Erhöhung des elektrischen Widerstands unvermeidlich. Der erhöhte Widerstand des Stacks führt zu einer höheren Betriebstemperatur. Wird die maximale Betriebstemperatur überschritten, muss entweder die Stromstärke gesenkt werden, was zu einer Minderung der Wasserstoffproduktionsleistung führt, oder der Stack gekühlt werden (exothermer Modus), was zu einer Verschlechterung des Wirkungsgrads führt und zudem eine solche Kühlung mit Luft nur eine geringe Wirkung zeigt.

In vielen industriellen Anwendungen wird allerdings eine konstante Wasserstoff- oder Synthesegasproduktionsrate benötigt. Zudem ist es wünschenswert, bei Bedarf, kurzzeitig eine zusätzliche Menge Wasserstoff zur Bedienung von Lastspitzen bereitstellen zu können. Gegenstand dieser Erfindung ist die Zufuhr von Kohlenwasserstoffen im Elektrolysemodus, wodurch einerseits der Stack durch die endotherme Reformierungsreaktion zusätzlich gekühlt wird und andererseits eine erhöhte Menge an Wasserstoff als Bestandteil eines Synthesegases erzeugt wird, wodurch die Gesamtmenge des produzierten Wasserstoffs/Synthesegases, auch als Produktgas bezeichnet, konstant gehalten werden kann und/oder eine Überlast an Wasserstoff oder Synthesegas erreicht werden kann. Aus dem **Stand der Technik** sind unterschiedliche Betriebsverfahren bekannt, um SOEC- oder rSOC-Systeme zu betreiben.

Die Druckschrift WO 2006/001863 A2 beschreibt ein rSOC-System welches je nach Strom- und Gaspreis in den Betriebsmodi Brennstoffzelle oder Elektrolyse betrieben werden kann. Im Brennstoffzellenmodus wird zudem dem System eine größere Menge an Kohlenwasserstoff zugeführt, um die durch die Exothermie des Brennstoffzellenbetriebs anfallende Abwärme zur Produktion von Wasserstoff zu nutzen. Die dafür notwendige endotherme Reformierungsreaktion findet entweder in einem Vorreformer oder direkt auf der Wasserstoff-Elektrode des Stacks statt. Es werden verschiedene Betriebsmodi beschrieben, die je nach Kosten des Stroms und des Erdgases sowie der erwarteten Produktionsmenge an Wasserstoff angefahren werden. Die Druckschrift beschreibt allerdings nicht, wie Kohlenwasserstoffe im Elektrolysemodus zum Ausgleich der Degradation genutzt werden können.

Die Druckschrift EP 1 115 908 B1 beschreibt einen erdgasunterstützen Dampfelektrolyseur, dem die Anodenseite (Sauerstoff-Elektrode) mit einem Reformat aus einer katalytischen partiellen Oxidation von Erdgas betrieben wird. Das Ziel der Anordnung ist es, die Kosten der Wasserstofferzeugung zu senken und gleichzeitig den Wirkungsgrad der Elektrolyse zu erhöhen. Die Zuführung eines Brenngases zur Sauerstoff-Elektrode wird als technisch nicht umsetzbar angesehen. Es ist nicht ausgeführt, dass damit eine Degradation des Stacks ausgeglichen werden könnte, wobei dies auch für den Fachmann nicht in naheliegender Weise herleitbar ist, da die Druckschrift eben keinerlei Anregungen in diese Richtung gibt.

Aus der Druckschrift EP 3 168 330 B1 ist ein Hochtemperatur-Elektrolysesystem bekannt, welches bei fluktuierendem Energieinput einen konstanten Wasserstoff-Output bereitstellt. Dazu dient ein Wasserstoffspeichermedium. Nachteilig an einer solchen Anordnung ist die begrenzte Speicherkapazität, höhere Kosten sowie eine mögliche Degradation des Speichermaterials.

Weiter beschreibt die Druckschrift WO 2013/078142 A2 ein Brennstoffzellensystem (engl. Solid Oxide Fuel Cell, SOFC), welches neben Strom auch Wasserstoff und Kohlendioxid produziert. Dazu wird ein Gemisch umfassend einen Kohlenwasserstoff und Dampf einem SOFC-System zugeführt. Das Anodenrestgas wird mit Kohlenwasserstoff gemischt und einem Vorreformer zugeführt, um daraus ein wasserstoffreiches Synthesegas herzustellen. Diese Funktionalität wird allerdings nicht für einen Elektrolysemodus beschrieben. Die Nutzung dieses Mechanismus als Degradationsausgleich wird ebenfalls nicht offenbart und ist für den Fachmann auf Grund fehlender Hinweise und Anregungen nicht in naheliegender Weise herleitbar oder gar vorherzusehen.

Bisher werden rSOC im Stand der Technik nur dazu benutzt, je nach Bedarf Strom (aus H₂ oder Kohlenwasserstoffen) im SOFC-Modus und/oder Wasserstoff im SOEC-Modus mittels Elektrolyse zu erzeugen. Die verwendeten Stacks im Stand der Technik unterliegen einer Degradation. Hierbei muss durch die Degradation der Stacks entweder in der Elektrolyse der Wirkungsgrad gesenkt werden (exothermer Modus) oder die Wasserstoff-/Synthesegas-Erzeugungsleistung bei konstantem Wirkungsgrad verringert werden (thermo-neutraler Modus). Letztgenannte Betriebsführung ist für den Verwender attraktiver, da die Stromkosten bei der Wirtschaftlichkeit eine wesentliche Rolle spielen. Hier entsteht eine Bedarfslücke, die nur durch eine externe Wasserstoff-/Synthesegasquelle im Stand der Technik beseitigt werden kann.

Industrieprozesse, die Wasserstoff oder Synthesegas verwenden, greifen derzeit auf fossile Energiequellen (meist Erdgas) zurück. Die SMR (Steam-Methane-Reforming) wird dabei direkt vom Nutzer betrieben oder als zentrale H₂-Erzeugung bei einem Lieferanten für technische Gase aufgestellt. SMR-Anlagen besitzen nur einen Wirkungsgrad von ca. 70 % bezogen auf das eingesetzte Erdgas und den Wasserstoff als Produkt, da Wärme für die Reformierung der Kohlenwasserstoffe benötigt wird. Hierfür wird nach dem Stand der Technik ein Brenner eingesetzt, mittels dem unverbrauchten Prozessgas thermisch umgesetzt werden. Der Einsatz von fossilem Erdgas ist mit einer entsprechenden Menge an CO₂-Emissionen verbunden. Daher wird daran gearbeitet, Wasserstoff und Synthesegas zunehmend aus erneuerbarem Strom zu erzeugen. Wird der Wasserstoff in eine Erdgas-Pipeline eingespeist oder gibt es in einer industriellen Infrastruktur noch andere Wasserstoff-/ Synthesegaserzeuger, dann spielen Schwankungen in der Erzeugung bzw. eine Verringerung der Wasserstoff-/Synthesegasmenge keine große Rolle. Wird der Wasserstoff allerdings lokal für einen Industrieprozess benötigt, der an keine entsprechende Versorgungsinfrastruktur angebunden ist, muss die produzierte Wasserstoff-/Synthesegasmenge innerhalb der Lebensdauer der Stacks jeweils der Auslegungsmenge entsprechen. Dazu sind nach dem Stand der Technik folgende Maßnahmen möglich:
1. Das Elektrolysesystem wird überdimensioniert, um die erforderliche Wasserstoff-/Synthesegasmenge auch am Ende der Lebensdauer des Elektrolysestacks bereitstellen zu können. Das ist mit hohen Investitionskosten verbunden, da das Elektrolysesystem zu Beginn und im Verlauf seines Betriebs nur (mit einer sich verringernden) Teillast betrieben werden kann. Alternativ ließen sich in Abhängigkeit der degradationsabhängigen Produktgasmenge, weitere Elektrolysemodule zubauen oder degradierte Module ersetzen. Auch hiermit sind zusätzliche Investitionskosten sowie eine schlechte Ausnutzung der Elektrolyseurkapazität verbunden.
2. Das Elektrolysesystem wird mit zunehmender Degradation im exothermen Modus betrieben. Das ist ungünstig, da die Kühlwirkung des exothermen Modus begrenzt ist, das System sowohl für die niedrigen Spülluftmengen im thermo-neutralen Modus als auch für sehr hohe Luftmengen im exothermen Modus dimensioniert werden muss und die Leistungselektronik für die mit dem exothermen Modus höheren Betriebsspannungen ausgelegt werden muss. Der Betrieb im exothermen Modus ist mit höheren Betriebskosten verbunden, die Auslegung auf größere Luftmengen und Betriebsspannungen mit höheren Investitionskosten verbunden. Zudem werden die Zellen bei höheren Temperaturen stärker thermo-mechanisch belastet, wodurch vermehrt Zellbrüche oder Versagen von Glasdichtungen auftreten können.
3. Es wird eine weitere Wasserstoffquelle angebunden, z.B. ein kostengünstiges Niedertemperatur-Elektrolyse-System, ein SMR-System (Steam Methane Reforming) oder es wird logistischer Wasserstoff via Trailer bereitgestellt. All diese Fälle sind mit höheren Investitions- oder Betriebskosten und mit vergleichsweise niedrigen Wirkungsgraden bei der Erzeugung des zusätzlichen Wasserstoffs verbunden.

Der vorliegenden Erfindung liegt die **Aufgabe** zugrunde, ein Festoxidzellen-System-Betriebsverfahren anzugeben, das es ermöglicht, ein Festoxid-Elektrolysezellen-System bzw. ein reversibles Feststoffzellen-System im Elektrolyse-Modus hocheffizient zu betreiben und insbesondere die zuvor aufgezeigten wirtschaftlichen und technischen Probleme zu lösen. Insbesondere ist dabei die Teilaufgabe der Konstanthaltung der Wasserstoff-/Synthesegasmenge bei Degradation des Stacks zu lösen.

**Gelöst** werden die zuvor genannten Aufgaben bzw. erkannten Probleme mit einem Festoxidzellen-System-Betriebsverfahren gemäß dem geltenden Anspruch 1. Weitere vorteilhafte Ausgestaltungen sind den Unteransprüchen zu entnehmen.

Das Festoxidzellen-System-Betriebsverfahren, in dem in einer elektrochemischen Umwandlung, mittels elektrischem Stroms aus Wasserdampf H₂O(g) oder einem Gemisch umfassend Wasserdampf H₂O(g) und Kohlendioxid CO₂, Wasserstoff H₂ und/oder Synthesegas CO+H₂ erzeugt wird, ist dadurch gekennzeichnet, dass dem Wasserdampf H₂O(g) oder dem Gemisch umfassend Wasserdampf H₂O(g) und Kohlendioxid CO₂ eine zusätzliche Menge an wenigstens einem der Stoffe aus der Gruppe Erdgas, Methan CH₄ oder eines anderen Kohlenwasserstoffes CₘHₙ zusätzlich für eine Umsetzung in Synthesegas CO+H₂ beigemischt werden, wobei eine endotherme Reformierung der beigemischten Kohlenwasserstoffe durch Einkoppeln von Abwärme aus der elektrochemischen Umwandlung erfolgt.

Der Klarheit halber sei angemerkt, dass Erdgas im Wesentlichen und in der Regel zu etwa 85-98% aus Methan besteht, wobei darin auch andere Kohlenwasserstoff-Verbindungen enthalten sein können. Der Begriff Erdgas ist im Sinne der Beschreibung der vorliegenden Erfindung als ein Methan-reiches Gas bzw. als Gas der Gasfamilie 2 zu verstehen. Wesentlich für das erfindungsgemäße Verfahren ist dabei, dass das zusätzlich bereitgestellte Gas bei seiner Reformierung eine große Menge an Wasserstoff bereitstellen kann. Propan, Butan aber auch Methanol, Ethanol oder Dimethylether sind ebenfalls für das Verfahren geeignet.

Bei der Zufuhr von Kohlenwasserstoffen wird im SOEC-Modus ein Synthesegas (H₂+CO) erzeugt. In vielen Anwendungen, z.B. bei der Verwendung von Wasserstoff zur Reduktion von Eisen in einem Hochofen oder einer Direkt-Reduktions-Anlage, kann das Synthesegas ohne weitere Gasnachbehandlung verwendet werden. Wird allerdings Wasserstoff mit hoher Reinheit benötigt, dann müssen CO und CO₂ entfernt werden. Hier kommen Standardprozesse einer Dampfreformierungsanlage zum Einsatz: Im ersten Schritt wird über eine oder mehrere Shift-Stufen das CO zu CO₂ konvertiert. Die in der Shift-Reaktion entstehende Wärme kann innerhalb des Systems zur Eduktaufheizung oder Dampferzeugung verwendet werden. Das Rest-CO kann über eine selektive Oxidation oder selektive Methanisierung entfernt werden. Zur Abtrennung des CO₂ kommen übliche Verfahren wie eine Membranabtrennung, Druckwechseladsorption (engl. Pressure Swing Adsorption, PSA), Temperaturwechseladsorption (engl. Temperature Swing Adsorption, TSA), Aminwäsche oder kryogene Separation zum Einsatz. Aber auch neuartige Kompressionsverfahren zur Druckerhöhung des Wasserstoffs z. B. eine elektrochemische Kompression oder die Kompression mittels Metallhydridspeichern können gleichzeitig zur Gasreinigung eingesetzt werden.

Die endotherme Reformierung der beigemischten Kohlenwasserstoffe kann sowohl intern als auch extern bezüglich der Stacks des Festoxidzellen-Systems erfolgen, wobei eine interne Reformierung parallel zu der elektrochemischen Umwandlung in den Zellen und eine externe Reformierung mittels eines zusätzlich bereitgestellten Reformers erfolgen kann. Wirtschaftlich vorteilhaft ist, wenn auf einen externen Reformer verzichtet werden kann und die Reformierung vollständig innerhalb der Festoxidzellen des Festoxidzellen-Systems erfolgt und auf einen externen Reformer verzichtet werden kann.

Die Nutzung eines Reformers bzw. der internen Reformierung in den Zellen kann zu einer Steigerung des Gesamtwirkungsgrades führen, wenn durch die Ohm'schen Verluste der elektrochemischen Umwandlung ansonsten nur begrenzt nutzbare Überschusswärme aus dem System abgeführt werden müsste.

Ein erfindungsgemäßes Festoxidzellen-System kann insbesondere mit einem Reformierungs-Modul bzw. einer internen Reformierung (oder auch beidem) ausgestattet bzw. betrieben, um eine konstante Menge des wasserstoffreichen Gases zu erzeugen. Dazu werden dem System insbesondere fossiles Erdgas, Erdgas aus erneuerbaren Quellen, wie z.B. synthetisches Erdgas (engl. Synthetic Natural Gas, SNG) oder andere geeignete Kohlenwasserstoffverbindungen zugeführt. Der Begriff konstant bezieht sich hierbei auf den zeitlichen Mittelwert der Gesamtmenge des von dem Festoxidzellen-System erzeugten Wasserstoffs H₂ bzw. Synthesegases bezogen auf einen Betrieb unter Nennlast.

Im Elektrolysebetrieb entstehende Abwärme kann einen endothermen Dampfreformierungsprozess der Kohlenwasserstoffe mit Wärme versorgen, so dass der Umwandlungswirkungsgrad sehr hoch ist.

In einer besonders bevorzugten Ausgestaltung erfolgt eine zusätzliche Zufuhr von Erdgas / Methan CH₄ und/oder anderen Kohlenwasserstoffen CₘHₙ zur Kompensation der Auswirkungen einer Degradation der Zellen. Da durch die Reformierung eine zusätzliche Menge an Wasserstoff H₂ als Teil von Synthesegas (CO+H₂) produziert wird, kann durch die zusätzliche Zufuhr eines Kohlenwasserstoffs als Wasserstoffquelle mit Vorteil eine gleichbleibende Menge an Wasserstoff über die Laufzeit des Systems bereitgestellt werden.

Gleichzeitig oder zusätzlich ist es möglich, durch die Zuführung von Kohlenwasserstoffen und deren endotherme Reformierung überschüssige Abwärme aus dem elektrochemischen Umwandlungsprozess in der Zelle wirtschaftlich zu nutzen. Die Zellen können so über ihre Gesamtlaufzeit länger in ihrem thermo-neutralen Punkt betrieben werden, wodurch sich die Wirtschaftlichkeit des Systems erhöht. Vorzugsweise können die Festoxidzellen des Festoxidzellen-Systems durch die endotherme Reformierung gekühlt werden, so dass diese über ihre Gesamtlebensdauer thermo-neutral betrieben werden können.

Im thermo-neutralen Betrieb stellt sich die Spannung auf einen charakteristischen Wert ein. Nur wenn man exotherm fährt, dem Stack also Wärme entzieht, steigt die Spannung. Die Spannung ist daher als Regelgröße ungeeignet. Ebenfalls wenig als Regelgröße geeignet sind die Normvolumen- bzw. Massenströme der Produktgase. Grundsätzlich ließe sich für den Stack eine konstante elektrische Leistung P einstellen und eine Regelung der Normvolumenströme der Feedgase in Abhängigkeit der gemessenen Normvolumenströme von H₂ bzw. des Synthesegases in den Produkten vornehmen. Auch ließe sich bei der Co-Elektrolyse die Zusammensetzung des Synthesegases am Stack-Ausgang über die gemessene Stacktemperatur ermitteln. Eine Messung des Normvolumenstroms des erzeugten Wasserstoffs ist technisch jedoch nur aufwendig zu realisieren, da H₂ und H₂O am Ausgang des Stacks als Stoffgemisch vorliegen. Noch komplexer wird dies bei der Co-Elektrolyse, da in dem Produktgas mindestens 4 Komponenten enthalten sind.

Erfindungsgemäß wird daher besonders bevorzugt die produzierte Wasserstoffmenge und/oder die Synthesegasmenge über das Faraday'sche Gesetz mit Hilfe der gemessenen Stromstärke bestimmt, welche gleichzeitig als Regelgröße geeignet ist. Um die Produktionsrate des erzeugten Wasserstoffs bzw. des Synthesegases konstant zu halten, wird ein Sollwert für den H₂-Output bzw. Synthesegasoutput über die Vorgabe eines Startwerts für die Stromstärke eingestellt und langsam erhöht, wobei die Stacktemperatur gemessen wird. Wenn die Stromstärke nicht mehr erhöhbar ist, da die Stacktemperatur ihren Sollwert für den thermoneutralen Betrieb oder einen vorgegebenen Maximalwert erreicht hat, wird ein zusätzlicher Normvolumenstrom eines Kohlenwasserstoffs CₘHₙ bereitgestellt, so dass ein vorgegebener Sollwert für den Normvolumenstrom des insgesamt produzierten Wasserstoffs bzw. Synthesegases erreicht wird. Der Normvolumenstrom des insgesamt produzierten Wasserstoffs bzw. Synthesegases ergibt sich aus der Summe des Normvolumenstroms des elektrolytisch produzierten Wasserstoffs, der gemäß dem Faraday'schen Gesetz aus der gemessenen Stromstärke berechnet wird und dem Normvolumenstrom des reformierten Wasserstoffs. Für die Regelung können Look-up-Tabellen vorgegeben sein, aus denen sich der Normvolumenstrom des reformierten Wasserstoffs mittels darin hinterlegter Reformierungsraten und Stoffmengenverhältnisse aus dem Normvolumenstrom des bzw. der zugeführten Kohlenwasserstoffe vorgegeben sind.

Ergänzend oder alternativ kann bei einem bekannten Degradationsverhalten der Zellen des Stacks eine Rampe für den Normvolumenstrom des oder der zugeführten Kohlenwasserstoffe vorgegeben werden. Das Degradationsverhalten kann durch Messung von Stromstärke, Spannung und Stack-Temperatur über der Zeit statistisch ermittelt und die Rampe mittels einer empirischen Funktion oder einer Look-Up-Tabelle für die Regelung hinterlegt werden.

Weiter kann eine zusätzliche Zufuhr von Erdgas / Methan und/oder anderen Kohlenwasserstoffen CₘHₙ mit endothermer Reformierung zur Erhöhung des Wasserstoffoutputs H₂ und/oder des Synthesegasoutputs CO+H₂ des Systems im thermoneutralen Betrieb führen, wodurch sich Spitzenlasten bzw. kurzzeitige und/oder kurzfristige Mehrbedarfe an H₂ bzw. Synthesegas durch nachgelagerte Prozesse bedienen lassen. Ferner kann ebenfalls die Erhöhung der Produktmenge zur Erreichung einer Überlast oder Nennlast mit weniger Strom erfolgen, beispielsweise wenn eine reduzierte Menge an erneuerbarem Strom aus einem erneuerbaren Erzeuger wie einem Wind- oder Solarpark bereitgestellt werden kann oder die Zuführung von Kohlenwasserstoffen aufgrund des aktuellen Strompreises für eine Zeitdauer wirtschaftlicher ist.

Eine kurzzeitige und kurzfristige Erhöhung der Produktionsmenge von Wasserstoff ist möglich, indem man die Stromstärke und Normvolumenströme der Edukte gleichzeitig proportional gemäß einer vorgegebenen Feed-Conversion-Rate erhöht und dabei die Stacktemperatur überwacht. Wird die maximale Stacktemperatur erreicht, wird die Stromstärke konstant gehalten und Kohlenwasserstoff zudosiert. Gleichzeitig wird die Zufuhr von H₂O/CO₂ entsprechend angepasst, um die Feed-Conversion-Rate konstant zu halten und die gewünschte Qualität des Synthesegases beizubehalten.

Ein Konstanthalten der Produktionsmenge von Wasserstoff bei niedrigerem Stromangebot ist möglich, indem man die Stromstärke und Normvolumenströme der Edukte gleichzeitig proportional gemäß einer vorgegebenen Feed-Conversion-Rate reduziert und die Stromstärke auf einen Wert einstellt, dass die von dem System aufgenommene elektrische Leistung noch vollständig aus dem zur Verfügung stehenden Angebot an erneuerbarem Strom gedeckt werden kann. Die Stacktemperatur wird überwacht. Wird eine minimale Stacktemperatur erreicht, wird die Stromstärke konstant gehalten. Gleichzeitig wird die Zufuhr von H₂O/CO₂ entsprechend angepasst, um die Feed-Conversion-Rate konstant zu halten und die gewünschte Qualität des Synthesegases beizubehalten.

Hochtemperatur-SOEC bzw. -rSOC im Elektrolyse-Modus werden bevorzugt im thermoneutralen Modus betrieben. Dabei stehen die Wärme, die durch Ohm'sche Verluste im Stack entsteht, und der Wärmeanteil, der zur Spaltung von Wasserdampf und/oder CO₂ in der Elektrolyse eingekoppelt werden kann, im Gleichgewicht. Da die Ohm'schen Verluste bzw. der Widerstand des Stacks stark von der Stromdichte und der Temperatur des Stacks abhängen, ändert sich im thermo-neutralen Betrieb je nach Stromdichte auch die Temperatur des Stacks. Soll trotz Degradation eine gleichbleibende oder kurzzeitig und kurzfristig eine größere Menge an Wasserstoff/Synthesegas erzeugt werden, wird den Zellen erfindungsgemäß zusätzlich zu Wasserdampf oder eines Gemischs umfassend Wasserdampf und Kohlendioxid Erdgas oder andere Kohlenwasserstoffe zugeführt. Damit findet in den Zellen eine endotherme Dampfreformierung statt, die Wärme verbraucht. Als Resultat wird zum einen die Temperatur der Zelle gesenkt und zum anderen eine größere Menge an Wasserstoff erzeugt. Z.B. entstehen aus einem Mol Methan (dem Hauptbestandteil von Erdgas) bis zu vier Mol Wasserstoff. Durch die Zufuhr der Kohlenwasserstoffe und die damit verbundene Dampfreformierung kann damit die Temperatur des Stacks geregelt werden. Dies ist besonders wichtig, um die Degradation des Stacks zu kompensieren. Die Degradation erhöht den Widerstand des Stacks und damit die Ohm'schen Verluste. Die maximale Stacktemperatur würde daher ohne das erfindungsgemäße Verfahren schon bei einer niedrigeren Stromdichte erreicht werden, was mit einer Senkung der maximal erzeugbaren Wasserstoff- bzw. Synthesegasmenge einher gehen würde. Durch die Zufuhr der Kohlenwasserstoffe und der mit der endothermen Reformierung verbundenen Aufnahme von Abwärme aus dem Stack kann sowohl die Stacktemperatur verringert als auch die Menge an produziertem Wasserstoff-/Synthesegas gesteigert werden. Damit ist ein Ausgleich der Degradation möglich.

Durch die Zufuhr von Kohlenwasserstoffen und der damit verbunden endothermen Dampfreformierung kann der Stack zum einen thermo-neutral bei einer höheren Stromdichte betrieben werden und zum anderen wird mehr Wasserstoff-/Synthesegas an sich erzeugt. Das für die Kompensation der Degradation verwendete Verfahren ist somit auch dafür geeignet, kurzzeitig und kurzfristig auf effiziente Weise eine größere Menge von zusätzlichem Wasserstoff/Synthesegas bereitzustellen oder eine gleichbleibende Menge von Wasserstoff/Synthesegas unter einer reduzierten Aufnahme von elektrischer Leistung bereitzustellen. Hier kann ergänzend mit Hilfe der Variabilität der Stacktemperatur und damit des Widerstands des Stacks auch bei geringerem Stromeintrag ein höherer oder konstanter Output an Wasserstoff/Synthesegas erfolgen.

In einer weiteren Ausgestaltung kann zusätzliche Wärme zur Erhöhung des Wasserstoffoutputs und/oder des Synthesegasoutputs CO+H₂ des Systems bedarfsweise von externen Quellen zugeführt werden.

Steht aus Industrieprozessen (Metallurgie, chemische Industrie) Hochtemperaturabwärme oberhalb der Reformierungstemperatur von ca. 500-700 °C zur Verfügung, können dem System Kohlenwasserstoffe zugeführt werden und diese mittels der endothermen Dampfreformierung in Wasserstoff/Synthesegas gewandelt werden. Dazu wird die Abwärme bevorzugt einem externen Reformer zugeführt. Die Reformierung kann dann weitestgehend in dem externen Reformer bzw. katalytischen Reaktor erfolgen, so dass lediglich der Anteil der beigemischten Kohlenwasserstoffe endotherm in den Zellen umgesetzt wird, der zum Stabilisieren der Temperatur auf den thermo-neutralen Betriebspunkt benötigt wird. Neben dem exothermen Reformer kann eine Bypass-Versorgung vorgesehen sein, so dass dem Stack dampfreformiertes Gas über den externen Reformer und unreformierte Kohlenwasserstoffe über einen Bypass zugeführt werden können.

In einer weiteren Variante kann dem Stack ein Reformer bzw. katalytischer Reaktor zur Regelung der Reformertemperatur zur Einstellung der internen Reformierung im Stack mittels Erhöhung oder Erniedrigung des Anteils an Kohlenwasserstoffen vorgeschaltet werden, wobei dem Reaktor zur Erhöhung der Umsetzung der Kohlenwasserstoffe Wärme aus der Abwärme des Stacks oder aus externen Quellen zugeführt wird.

Nachfolgend werden Ausführungsbeispiele der Erfindung anhand der beiliegenden Abbildungen in der Beschreibung detailliert beschrieben, wobei diese die Erfindung erläutern sollen und nicht beschränkend zu werten sind. Es handelt sich also um mögliche Ausführungsbeispiele bzw. Varianten.

Es zeigen:
- Abb. 1: das grundlegende Wirkprinzip des erfindungsgemäßen Festoxidzellen-System-Betriebsverfahrens in schematischer Darstellung eines Ausführungsbeispiels;
- Abb. 2a, 2b: den Verlauf der Wasserstoffabgabe bzw. des Wirkungsgrads über der Zeit t für Verfahren nach dem Stand der Technik, bei welchem keine Kompensation der Degradation erfolgt und dem erfindungsgemäßen Verfahren, bei dem zur Kompensation der Degradation Kohlenwasserstoffe CₘHₙ verwendet wird, und
- Abb. 3: eine schematische Darstellung eines Ausführungsbeispiels eines SOEC-Systems, welches für das erfindungsgemäße Verfahren geeignet ist.

**Abb**. **1** zeigt das grundlegende Wirkprinzip des erfindungsgemäßen Festoxidzellen-System-Betriebsverfahrens. Das prinziphaft dargestellte Festoxidzellen-System umfasst einen Stack 1 von SOEC bzw. rSOC, die in einem Elektrolyse-Modus betreibbar sind. Bezüglich des Wirkprinzips kann der Stack 1 auch als einzelne Zelle oder als Stack-Modul aufgefasst werden. Der Stack 1 umfasst eine Sauerstoff-Elektrode 2 (Anode) und eine Wasserstoffelektrode 3 (Kathode). Dem Stack 1 wird auf der Anodenseite Luft 8 als Spülmedium und auf der Kathodenseite ein gasförmiges Reformat aus CH₄, H₂O, CO₂, CO und H₂ 24 zugeführt und über die elektrochemische Reaktion unter Verwendung von präferiert erneuerbarem Strom Synthesegas (H₂, CO) als Produktgas 31 erzeugt, während auf der Anodenseite mit Sauerstoff O₂ angereichertes Spülmedium 9 freigesetzt wird.

Eine zusätzliche Menge an Wasserstoff zum Ausgleich einer Degradation der Zellen oder zum kurzzeitigen und kurzfristigen Abdecken eines Mehrbedarfs kann erzeugt werden, wenn dem Festoxidzellen-System Kohlenwasserstoffe CₘHₙ zugeführt werden. Die Kohlenwasserstoffe können zusammen mit dem Wasserdampf bzw. dem Gemisch umfassend Wasserdampf und Kohlendioxid, welches klassischer Weise in der Hochtemperatur-Co-Elektrolyse bereitgestellt wird, in einem externen Reformer 23 vorreformiert (nur teilweise umgewsandelt) oder vollständig reformiert werden. Dazu kann Wärme Q_{R} aus dem Stack 1 eingekoppelt werden. Alternativ oder zusätzlich ist eine interne Reformierung möglich, bei der Kohlenwasserstoffe, hier bevorzugt Methan, direkt an der katalytisch aktiven Wasserstoff-Elektrode in H₂ und CO umgewandelt werden. Dabei wird Wärme Q_{E} von der elektrochemischen Umwandlung durch die endotherme Reformierung abgeführt. Alternativ kann auch ohne den externen Reformer 23 gearbeitet werden. Das Eduktgas wird zusammen mit den Kohlenwasserstoffen CₘHₙ direkt an den Stack 1 geführt und in den Zellen des Stacks 1 reformiert.

Das dargestellte Verfahren kann stets angewendet werden, wenn Wasserstoff/Synthesegas bereitgestellt werden soll und Abwärme aufgrund der Ohm'schen Verluste im Stack zur Verfügung steht. Das ist der Fall, wenn der Stack degradiert und sich damit der Ohm'sche Widerstand erhöht.

Das Verfahren kann ebenfalls angewendet werden, wenn das Festoxidzellen--System an eine Synthese, z.B. Fischer-Tropsch-Synthese, angeschlossen ist. In dieser entsteht ein kohlenwasserstoffreiches Rück-/Kreislaufgas, welches in dem externen Reformer 23 oder direkt im Stack in H₂ und CO unter Verwendung von Wärme aus einer exotherm betriebenen Elektrolyse umgewandelt wird. Durch diese Wärmeauskopplung kann die Elektrolyse bei einer Leistungsdichte betrieben werden, bei der sonst der Stack entweder überhitzt oder das System durch Luft gekühlt wird und damit der Wirkungsgrad sinkt.

Die Wärmezufuhr zum externen Reformer 23 kann auf verschiedene im Stand der Technik bekannte Weisen erfolgen.

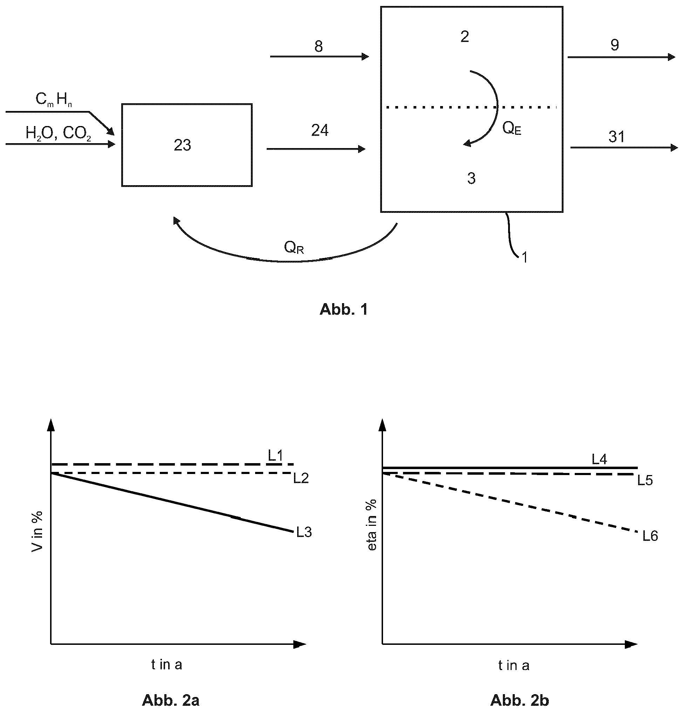

In **Abb. 2a und Abb. 2b** ist der relative Verlauf des Wasserstoff-Outputs V bzw. des Gesamtwirkungsgrads ETA über der Zeit für Verfahren nach dem Stand der Technik und dem erfindungsgemäßen Verfahren, bei dem zur Kompensation der Degradation Kohlenwasserstoffe CₘHₙ verwendet werden, dargestellt. L2 und L6 stellen den zeitlichen Verlauf des Wasserstoff-Outputs bzw. des Wirkungsgrads für Verfahren gemäß dem Stand der Technik dar, bei welchem keine Kompensation der Degradation der Zellen durch eine Beimischung von Kohlenwasserstoffen erfolgt. Das SOEC-System wird über die Zeit zunehmend exotherm betrieben, wodurch zwar eine nahezu konstante Abgabe von Wasserstoff sichergestellt werden kann, der Wirkungsgrad jedoch mit Zunahme der exothermen Prozessführung abnimmt. L3 und L4 stellen den zeitlichen Verlauf des Wasserstoff-Outputs bzw. des Wirkungsgrads für Verfahren gemäß dem Stand der Technik dar, bei welchem keine Kompensation der Degradation der Zellen durch eine Beimischung von Kohlenwasserstoffen erfolgt. Das SOEC-System wird zwar weiterhin in seinem thermoneutralen Punkt betrieben, wodurch der Wirkungsgrad zeitlich konstant gehalten werden kann, jedoch nimmt die Menge des abgegebenen Wasserstoffs relativ zum Nennwert des Wasserstoff-Outputs über die Zeit ab. Werden zur Kompensation der Degradation dem System nun Kohlenwasserstoffe zugeführt, so hat das den Effekt, dass zum einen zusätzlicher Wasserstoff (und zusätzliches Synthesegas) erzeugt wird und zum anderen der Stack durch die endotherme Reformierung gekühlt und so an seinem thermoneutralen Punkt betrieben werden kann. Damit kann auf eine sehr einfache Art und Weise sowohl der H₂-Output als auch der Wirkungsgrad konstant gehalten werden (vgl. L1 und L5).

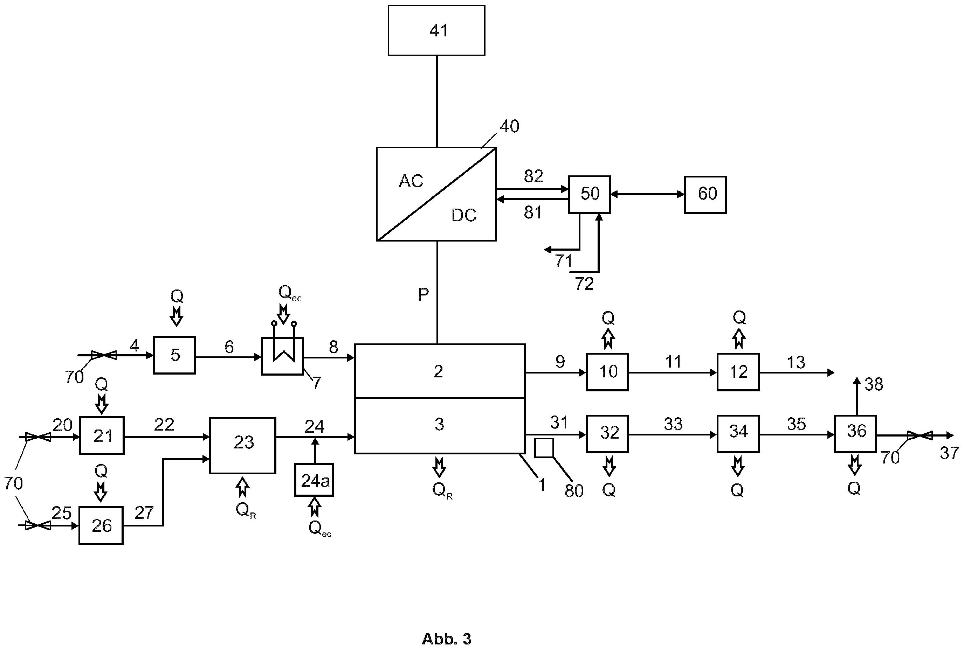

**Abb. 3** zeigt eine mögliche Ausführung eines SOEC-Systems, das mit dem erfindungsgemäßen Verfahren betrieben werden kann. Es besteht aus einem SOEC-Stack oder Stackmodul 1, der wiederum eine Sauerstoff-Elektrode 2, eine Wasserstoff-Elektrode 3 und einen sauerstoffleitenden Elektrolyten (nicht dargestellt) umfasst. Der Sauerstoff-Elektrode 2 des Stacks 1 wird temperierte Luft oder ein anderes temperiertes Spülmedium 8 wie Stickstoff, CO₂, Wasserdampf oder andere gegenüber Sauerstoff inerte Gase zugeführt. Das kalte Spülmedium 4 wird über einen Wärmeübertrager 5 zunächst rekuperativ erwärmt. Das vorgewärmte Spülmedium 6 wird zusätzlich mittels eines elektrischen Heizers 7 auf die gewünschte Stackeintrittstemperatur geregelt werden, bevor es der Sauerstoff-Elektrode 2 zugeführt wird. Das den Stack über die Sauerstoff-Elektrode 2 verlassende, sauerstoffangereicherte Spülmedium 9 wird mittels eines Wärmeübertragers 10 abgekühlt, wobei die Wärmeübertrager 5 und 10 bevorzugt ein Bauteil bilden. Das abgekühlte Spülmedium 11 kann einem weiteren Wärmeübertrager 12 zugeführt werden, um wiederum nutzbare Wärme auszukoppeln, bevor es als kaltes Spülmedium 13 das System verlässt.

Auf der Wasserstoff-Elektrodenseite wird Wasser bzw. Wasserdampf 20 dem System zugeführt. Bei der Verwendung von flüssigem Wasser wird dieses zunächst im Verdampfer 21 in den gasförmigen Zustand überführt. Der Verdampfer 21 kann als Wärmespeicher ausgeführt sein, in dem überschüssige Abwärme gespeichert wird, um Dampf energetisch mit minimalem Aufwand zu erzeugen. Außer mit Wärme/Abwärme kann die Energiezufuhr auch elektrisch erfolgen. Der Wasserdampf 22 wird mit Prozessgasen 27, z.B. Kohlenwasserstoffen CₘHₙ, insbesondere Methan CH₄, oder Rückgasen aus einem verbundenen Synthesesystem (nicht dargestellt), einem katalytischen Reaktor/Reformer 23 zugeführt. Der katalytische Reaktor/Reformer 23 kann dabei so ausgeführt sein, dass in diesen Wärme aus dem Stackmodul 1 eingekoppelt werden kann. Dabei kann der katalytische Reaktor/Reformer 23 direkt als Wärmeübertrager aufgebaut sein oder auch als Reihenschaltung von mindestens einer Wärmeübertrager- und Reaktorstufe ausgeführt werden. Der katalytische Reaktor/Reformer 23 erzeugt aus den Prozessgasen 27 ein Reformat 24, welches CH₄, H₂O, CO₂, CO und H₂ enthält. Das Reformat 24 kann bei Bedarf mittels eines Rekuperators 24a weiter aufgeheizt, bevor es der Wasserstoff-Elektrode 3 zugeführt wird. Alternativ oder zusätzlich kann dafür auch ein elektrischer Heizer (nicht dargestellt) verwendet werden. Zum katalytischen Reaktor 23 wird als zu reformierendes Medium Kohlenwasserstoff CₘHₙ, CO₂, Wasserdampf und/oder Rückgas aus einer Synthese (Kohlenwasserstoffe, CO, CO₂, H₂, H₂O) 25 zugeführt. Die Edukte 25 werden in einem Rekuperator oder elektrischem Heizer 26 erhitzt und dem Reaktor 23 als überhitztes Prozessgas 27 zugeführt. Der Reaktor 23 wird so betrieben, dass mit der externen Vorreformierung und der internen Reformierung in dem SOEC-Stack 1 Kohlenwasserstoffe in hohem Maße reformiert werden und der Stack 1 wirksam gekühlt werden kann. Dazu ist der Reaktor 23 auch als Methanisierungsreaktor betreibbar.

Das Reformat 24, welches der Wasserstoff-Elektrode 3 zugeführt wird, sollte als Kohlenwasserstoff nur noch Methan (CH₄) enthalten, welches innerhalb des SOEC-Stacks katalytisch sehr effektiv durch Nickel reformiert wird, bevor das Edukt elektrochemisch umgesetzt wird. Die interne Reformierung verbraucht dabei Wärme aus den Ohm'schen Verlusten der elektrochemischen Reaktion. Das von der Wasserstoff-Elektrode 3 abgeführte Produktgas bzw. Restgas 31, welches H₂, H₂O, CO und CO₂ enthält, wird zunächst in einem Rekuperator 32 zur Abführung von Wärme abgekühlt. Der Rekuperator 24a und der Rekuperator 32 können als eine gemeinsame Einheit ausgeführt sein.

Das abgekühlte Restgas 33 wird in einer Shift-Stufe 34 weiter abgekühlt. In der Shift-Stufe 34 werden in einer Wassergas-Shift-Reaktion CO und H₂O zu CO₂ + H₂ umgesetzt. Ggf. erfolgt eine CO-Feinreinigung, bei der Restmengen von CO umgesetzt werden. Das gereinigte Restgas 35 wird anschließend aufgereinigt bzw. konditioniert. Eine Aufreinigungsstufe 36 kann zur Entfernung von H₂O und/oder CO₂ oder anderen Begleitstoffen dienen. Zur Aufreinigung können Druckwechseladsorption (engl. Pressure Swing Adsorption, PSA) Temperaturwechseladsorption (Temperature Swing Adsorption, TSA), Aminwäsche, Membranverfahren und/oder kryogene Abtrennungsverfahren dienen. Für das Entfernen von Wasser bzw. Wasserdampf können ein einfacher Kondensator oder die vorher genannten Verfahren zum Einsatz kommen. Der gereinigte Wasserstoff/des Synthesegas 37 wird dann aus dem System abgeführt und kann z.B. einem nachgelagerten System zur Fischer-Tropsch-Synthese zugeführt werden. Die abgetrennten Restgase 38, wie z.B. H₂O und CO₂ werden im Normalfall wiederverwendet, um z.B. aufzubereitendes Wasser einzusparen oder die CO₂-Umsetzung zu erhöhen. Dafür wird das CO₂ gasförmig rezirkuliert und den Edukten 25 zugeführt. Die Normvolumenströme der zugeführten Prozessgase 4, 20, 25 können mittels geeigneter Aktoren, wie z.B. Massendurchflussregler (engl. mass flow controller, MFC) 70 überwacht und geregelt werden. Ebenso kann die Menge des Normvolumenstroms des gereinigten Wasserstoffs/des Synthesegases 37 mittels eines Massendurchflussregler 70 überwacht werden. Diese sind in der Abb. 3 der Übersichtlichkeit wegen nur exemplarisch angedeutet. Wenigstens ein Temperatursensor 80 ist an dem SOEC-Stack 1 vorgesehen, um die Austrittstemperatur der Produktgase 31 und damit den Betrieb des Stacks 1 im thermoneutralen Punkt zu überwachen und den Betrieb des Stacks regeln zu können. Alternativ kann der Sensor 80 auch an einer geeigneten Stelle in dem Stack 1 integriert werden.

Der SOEC-Stack 1 wird mittels eines AC/DC-Wandlers 40 mit elektrischer Leistung P versorgt. Der AC/DC-Wandler 39 ist eingerichtet, Leistung aus einem elektrischem Versorgungsnetz 41 aufzunehmen und als Gleichstrom mit einer geeigneten Spannung und Stromstärke für die elektrochemische Reaktion an den Elektroden 2, 3 des SOEC-Stacks bereitzustellen. Alternativ oder ergänzend kann ein DC/DC-Wandler (nicht dargestellt) vorgesehen sein, um dem SOEC-Stack 1 Gleichstrom aus einer DC-Stromquelle (Photovoltaikanlage) und/oder einem Batteriespeicher (ebenfalls jeweils nicht dargestellt) zuführen zu können. Der DC/DC-Wandler kann mit dem AC/DC-Wandler 40 baulich vereinheitlicht sein. Zum Zweck der besseren Übersichtlichkeit wird in der Abb. 3 auf eine Darstellung einzelner Phasen der elektrischen Leitungen zwischen den Baugruppen 1, 40 und 41 verzichtet.

Zur Regelung des Elektrolyseprozesses und insbesondere der Kompensation der Degradation des SOEC-Stacks 1 gemäß dem erfindungsgemäßen Verfahren ist eine Regelungseinrichtung 50 vorgesehen. Die Regelungseinrichtung 50 erhält Messsignale 72 von den Massendurchflussreglern 70 und stellt Signale für die Regelung 71 des Elektrolyseprozesses an die Massendurchflussregler 70 bereit. Messsignale 72 können beispielsweise die aktuellen Normvolumenströme der einzelnen Prozessgase bzw. Gasgemische sein. Auch die Zusammensetzung der Gase kann mittels geeigneter Sensoren überwacht werden. Weiterhin erhält die Regelungseinrichtung 50 Messsignale 82 von dem AC/DC-Wandler 40 und stellt an diesen Signale für die Regelung 71 des Elektrolyseprozesses bereit. Messsignale 82 sind beispielsweise die aktuelle Stack-Spannung und die aktuelle Stromstärke. Alternativ zur Stromstärke kann die Stromdichte, die in Bezug auf die aktive Fläche der Zellen aus der Stromstärke berechnet werden kann, als eine aus einer Messgröße abgeleitete Größe als ein Messignal verwendet werden. Die Regelungseinrichtung 50 erhält ebenfalls Messsignale 72 von dem Temperatursensor 80, insbesondere stellt der Temperatursensor Messwerte für die Stacktemperatur als Messignal 72 bereit. In der Regelungseinrichtung 50 sind Sollwerte für die Stacktemperatur und Normvolumenströme vorgegeben und für die Regelung benötigte Parameter und Look-up-Tabellen hinterlegt. Die Regelungseinrichtung 50 ist mit einer übergeordneten Regelungseinrichtung 60 verbunden und kann von dieser Sollwertvorgaben für die Regelung des Elektrolyseprozesses, z.B. der aktuell benötigten Wasserstoffmenge erhalten, und Informationen über die verfügbare Wasserstoffmenge und weitere Statusinformationen bereitstellen. Die Regelungseinrichtung 60 kann Teil eines übergeordneten SCADA-Systems sein.

Die Regelungseinrichtung 50 ist kommunikativ zum Austausch von Messsignalen und Regelbefehlen sowie ggf. weiteren Informationen mit dem AC/DC-Wandler 40, der übergeordneten Regelungseinrichtung 60, sowie den Massendurchflussreglern 70 und dem Temperatursensor 80 über entsprechende Signalleitungen verbunden (der Übersichtlichkeit halber nicht dargestellt).

Die Regelungseinrichtung 50 kann als speicherprogrammierbare Steuerung (SPS, englisch: programmable logic controller, PLC) oder Industriecomputer ausgewählt sein und umfasst mindestens einen Prozessor, der eingerichtet ist, Informationen, einschließlich der Informationen von den Massendurchflussreglern 70 und dem Temperatursensor 80 zu verarbeiten. Die Regelungseinrichtung 50 umfasst einen transitorischen Speicher und einen nicht-transitorischen Speicher zur Speicherung und Bereitstellung von Informationen. Das erfindungsgemäße Verfahren kann als Software oder Firmware in dem nicht-transitorischen Speicher vorgehalten sein. Die Regelungseinrichtung 50 kann ferner mindestens eine Ein-/Ausgabeeinrichtung umfassen, die jede in der Technik bekannte Einrichtung zur Bereitstellung von Eingangsdaten 72, 82 für das Steuersystem 50 und/oder zur Bereitstellung von Ausgangssignalen 71, 81 an die Massendurchflussregler 70 und den AC/DC-Wandler 40, umfassen kann. Die Ausführung von Befehlssequenzen ist nicht auf eine bestimmte Kombination von Hardware-Schaltkreisen und Software-Anweisungen beschränkt, unabhängig davon, ob diese hier beschrieben und/oder dargestellt sind. Die Regelungseinrichtung 50 kann auch mindestens eine Schnittstelle enthalten, die es der Regelungseinrichtung 50 ermöglicht, mit den Massendurchflussreglern 70, dem Temperatursensor 80 und dem AC/DC-Wandler 40 zu kommunizieren. Die Sensorschnittstelle kann z.B. ein oder mehrere Analog-Digital-Wandler sein oder enthalten, die analoge Signale in digitale Signale umwandeln, die vom Prozessor verwendet werden können. Die Sensorschnittstelle kann auch eingerichtet sein, Informationen mittels verschiedener Datenübertragungsprotokolle zu verarbeiten.

### BEZUGSZEICHENLISTE

- 1: SOEC-Stack / Zelle / Stackmodul
- 2: Sauerstoff-Elektrode
- 3: Wasserstoff-Elektrode
- 4: Spülmedium
- 5: Wärmeübertrager
- 6: vorgewärmtes Spülmedium
- 7: Elektrischer Heizer
- 8: Luft/Spülmedium
- 9: sauerstoffangereicherte Luft/Spülmedium
- 10: Wärmeübertrager
- 11: abgekühltes Spülmedium
- 12: Wärmeübertrager
- 13: kaltes Spülmedium
- 20: Wasserdampf/H₂O
- 21: Verdampfer
- 22: Wasserdampf/H₂O
- 23: Katalytischer Reaktor/Reformer
- 24: Reformat / Eduktgas
- 24a: Rekuperator / elektr. Heizer
- 25: CₘHₙ, CO₂, CO, H₂, H₂O
- 26: Rekuperator / elektrischer Heizer
- 27: überhitztes Prozessgas
- 31: Restgas
- 32: Rekuperator
- 33: abgekühltes Restgas
- 34: Shift-Stufe
- 35: gereinigtes Restgas
- 36: Aufreinigungstufe
- 37: gereinigter Wasserstoff H₂/ gereinigtes Synthesegas H₂+CO
- 38: abgetrennte Restgase
- 40: AC/DC-Wandler
- 41: elektrischen Versorgungsnetz
- 50: Regelungseinrichtung
- 60: übergeordnete Regelungseinrichtung
- 70: Massendurchflussregler
- 80: Temperatursensor
- 71,81: Regelungssignale
- 72, 82: Messsignale
- L1: zeitlicher Verlauf des Wasserstoff-Outputs nach dem erfindungsgemäßen Verfahren
- L5: zeitlicher Verlauf des Wirkungsgrads nach dem erfindungsgemäßen Verfahren
- L2, L3: zeitlicher Verlauf des Wasserstoff-Outputs nach dem Stand der Technik
- L4, L6: zeitlicher Verlauf des Wirkungsgrads nach dem Stand der Technik
- Q_{ec}: Wärmezufuhr elektrisch
- Q: Wärmezufuhr thermisch
- Q_{R}: für die externe Reformierung abgeführte Wärme
- Q_{E}: bei der internen Reformierung verbrauchte Wärme

## Patentansprüche

1. Festoxidzellen-System-Betriebsverfahren, in dem in einer elektrochemischen Umwandlung, mittels elektrischem Stroms aus Wasserdampf H₂O(g) oder einem Gemisch umfassend Wasserdampf H₂O(g) und Kohlendioxid CO₂, Wasserstoff H₂ oder Synthesegas CO+H₂ erzeugt wird,
**dadurch gekennzeichnet, dass**
dem Wasserdampf H₂O(g) oder dem Gemisch umfassend Wasserdampf H₂O(g) und Kohlendioxid CO₂ eine zusätzliche Menge an wenigstens einem der Stoffe aus der Gruppe Erdgas, Methan CH₄ oder eines anderen Kohlenwasserstoffes CₘHₙ zusätzlich für eine Umsetzung in Synthesegas CO+H₂ beigemischt werden, wobei eine endotherme Reformierung der beigemischten Kohlenwasserstoffe durch Einkoppeln von Abwärme aus der elektrochemischen Umwandlung erfolgt.

2. Festoxidzellen-System-Betriebsverfahren nach Anspruch 1,
**dadurch gekennzeichnet, dass**
die zusätzliche Beimischung des wenigstens einen Stoffes zur Kompensation der Auswirkungen einer Degradation der Festoxidzellen des Festoxidzellen-Systems eingesetzt wird, indem eine zusätzliche Menge an Wasserstoff H₂ produziert wird, mittels dessen die Gesamtmenge des von dem Festoxidzellen-System erzeugten Wasserstoffs H₂ bezogen auf einen Betrieb unter Nennlast zeitlich konstant gehalten wird.

3. Festoxidzellen-System-Betriebsverfahren nach einem der vorhergehenden Ansprüche,
**dadurch gekennzeichnet, dass**
die produzierte Wasserstoffmenge und/oder die Synthesegasmenge über das Faraday'sche Gesetz mit Hilfe der gemessenen Stromstärke bestimmt wird.

4. Festoxidzellen-System-Betriebsverfahren nach einem der vorhergehenden Ansprüche,
**dadurch gekennzeichnet, dass**
bei einem bekannten Degradationsverhalten der Zellen des Stacks eine Rampe für den Normvolumenstrom des oder der zugeführten Kohlenwasserstoffe vorgegeben werden.

5. Festoxidzellen-System-Betriebsverfahren nach einem der vorhergehenden Ansprüche,
**dadurch gekennzeichnet, dass**
die Festoxidzellen des Festoxidzellen-Systems durch die endotherme Reformierung gekühlt werden, so dass diese über ihre Gesamtlebensdauer thermo-neutral betrieben werden können.

6. Festoxidzellen-System-Betriebsverfahren nach einem der vorhergehenden Ansprüche,
**dadurch gekennzeichnet, dass**
eine interne Reformierung des wenigstens einen Stoffes innerhalb der Festoxidzellen des Festoxidzellen-Systems erfolgt.

7. Festoxidzellen-System-Betriebsverfahren nach dem vorhergehenden Anspruch,
**dadurch gekennzeichnet, dass**
zusätzlich zu der internen Reformierung eine externe Reformierung des wenigstens einen Stoffes mittels eines dem Festoxidzellen-System vorgeschalteten Reformers erfolgt und Wärme von dem Festoxidzellen-System an den Reformer abgeführt wird, um die Festoxidzellen des Festoxidzellen-Systems zu kühlen.
